# Europäisches Patentamt
## European Patent Office
## Office européen des brevets

(19)

(11) Veröffentlichungsnummer: **0 043 581**
**B1**

(12)

# EUROPÄISCHE PATENTSCHRIFT

(45) Veröffentlichungstag der Patentschrift:
20.03.85

(51) Int. Cl.⁴: **F 16 C 33/66,** A 01 D 69/12, F 16 H 7/12

(21) Anmeldenummer: 81105252.1

(22) Anmeldetag: 07.07.81

(54) Schmiermittelvorrichtung für ein Lager.

(30) Priorität: 07.07.80 US 166013

(43) Veröffentlichungstag der Anmeldung:
13.01.82 Patentblatt 82/2

(45) Bekanntmachung des Hinweises auf die Patenterteilung:
20.03.85 Patentblatt 85/12

(84) Benannte Vertragsstaaten:
DE FR GB IT

(56) Entgegenhaltungen:
FR - A - 2 131 699
US - A - 2 823 553
US - A - 3 239 284
US - A - 3 586 396

FAG Druckschrift Publ.-Nr. 00200 DA, Seite 36
Aetna Bearing Co. Catalogue 8-253, Section 120

(73) Patentinhaber: DEERE & COMPANY, 1 John Deere Road, Moline Illinois 61265 (US)

(72) Erfinder: Anderson, Sidney Elmer, Route 3, Box 160, Geneseo Illinois 61264 (US)

(74) Vertreter: Sartorius, Peter et al, DEERE & COMPANY European Office, Patent Department Postfach 503 Steubenstrasse 36-42, D-6800 Mannheim 1 (DE)

ACTORUM AG

## Beschreibung

Die Erfindung bezieht sich auf eine Schmiermittelvorrichtung für ein auf einer Achse angeordnetes Lager, das einen auf der gleichen Achse konzentrisch angeordneten, mit dieser drehfest verbundenen Innenring, einen auf dem Innenring angeordneten drehbaren Aussenteil sowie einen zwischen dem Innenring und dem Aussenteil vorgesehenen, über einen Schmiermitteleinlass beaufschlagbaren Schmiermittelraum aufweist, wobei der Innenring gegenüberliegende Stirnflächen und eine sich durch diese erstreckende Axialbohrung aufweist und der Schmiermitteleinlass in einem auf der Achse angeordneten, Stirnflächen und eine Axialbohrung aufweisenden Schmiermittelring vorgesehen ist, wobei der Schmiermittelring mit seiner einen Stirnfläche gegen die Stirnfläche des Innenringes konzentrisch und drehfest anliegt und sein Schmiermitteleinlass mit einer zwischen der Axialbohrung des Innenringes und der Achse gebildeten ersten Schmiermittelkammer in Schmiermittelverbindung steht.

Es ist eine Schmiermittelvorrichtung für ein Wälzlager einer Messerwelle bekannt (FAG Druckschrift Publ.-Nr. 00200 DA, Seite 36), die mittels Wälzlagern drehbar gelagert ist. Das Wälzlager besteht aus einem feststehenden Wälzlagergehäuse, in dem das Wälzlager mit einem Aussen- und Innenring angeordnet ist. Der Aussenring des Wälzlagers ist mit dem Wälzlagergehäuse und der Innenring mit der Messerwelle fest verbunden. Das Wälzlagergehäuse ist mittels eines Deckels und eines in einer Nute vorgesehenen Dichtringes nach aussen hin abgedichtet. Das Wälzlagergehäuse weist zwei Schmiernippel auf, die beiderseits des Wälzlagers vorgesehen sind und dazu dienen, Schmiermittel in das Innere des Wälzlagergehäuses einzubringen. Mit dieser Vorrichtung können die zum Wälzlager gehörenden Wälzkörper lediglich von der Seite her mit Schmiermittel beaufschlagt werden, so dass zur einwandfreien Schmiermittelversorgung des Wälzlagers an beiden Seiten des Wälzlagers Schmiermittel zugeführt wird, was aufwendig und teuer ist. Ausserdem ist es bereits bekannt, ein Kettenrad mittels eines am Kettenrad angeordneten Schmiernippels zu schmieren. Das hat jedoch den Nachteil, dass bei Stillstand des Kettenrades der Schmiernippel jedesmal eine neue Stellung einnimmt, so dass er nicht immer ohne weiteres zugänglich ist (Aetna – Bearing Company, Catalogue 8–253, Section 120).

Es ist eine Hubgabel bekannt (US-A-3 586 396), deren Hubschienen im Kugellager verschiebbar aufgenommen sind. Die entsprechenden Kugellager können über je eine Zentralbohrung mit Schmiermittel versorgt werden, die hierzu mit einer in einem Innenring des Kugellagers vorgesehenen Durchlassöffnung in Verbindung steht. Die Herstellung einer derartigen Schmiermitteleinrichtung erfordert einen hohen Arbeitsaufwand, da die im Innenring des Kugellagers vorgesehene Durchlassöffnung ganz genau zu der im Zapfen vorgesehenen Zentralbohrung ausgerichtet werden muss. Eine derartige Schmiermittelversorgung wird jedoch insbesondere dann erschwert, wenn das zu schmierende Teil mit geringeren Fertigungstoleranzen hergestellt wird und die Übergangsstellen zwischen den einzelnen Versorgungswegen bzw. Bohrungen nicht zueinander ausgerichtet sind.

Ferner ist eine Schmiermittelversorgung der eingangs genannten Art für zwei mit Abstand zueinander angeordneten Zylinderrollenlager bekannt (US-A-3 239 284). Die Schmiermittelversorgung erfolgt über einen an einer Schraubenmuffe vorgesehenen Schmiernippel, der über eine in einer Welle vorgesehene Aussparung mit einem Schmiermittelkanal in Verbindung steht, über den die beiden Stirnseiten der Zylinderrollenlager mit Schmiermittel beaufschlagt werden können. Bei einer derartigen Schmiermittelversorgung können die zu schmierenden Teile nur einseitig mit Schmiermittel beaufschlagt werden.

Demgegenüber liegt die Erfindung die Aufgabe zugrunde, eine Schmiermittelvorrichtung für Lager von drehenden Teilen derart auszubilden und anzuordnen, dass auf einfachste Weise das Schmiermittel zentral allen zu schmierenden Teilen gleichmässig zugeführt werden kann, ohne dass die Lager entfernt zu werden brauchen.

Diese Aufgabe wird dadurch gelöst, dass die Schmiermittelkammer über einen zwischen der Achse und der Axialbohrung des Innenringes gebildeten Ringspalt und über einen im Innenring vorgesehenen Schmiermitteldurchlass mit dem zwischen dem Innenring und dem Aussenteil vorgesehenen Schmiermittelraum in Verbindung steht, wobei der Schmiermittelring mittels einer Mutter gegen die aussenliegende Stirnfläche des Innenringes anpressbar und nach Lösen der Mutter durch Drehen einstellbar ist. Da der Innenring des Wälzlagers über den Schmiermittelring festgesetzt werden kann, besteht die Möglichkeit, auf einfache Weise die Axialbohrung des Innenringes derart gross auszubilden, dass zwischen der Axialbohrung des Innenringes und dem Aussenumfang der Achse ein Schmiermittelraum vorgesehen werden kann, der wiederum mit einer im Innenring vorgesehenen Durchlassöffnung in Verbindung steht, so dass das Lager zentral geschmiert und somit eine gleichmässige Schmiermittelversorgung gewährleistet werden kann. Da die Schmiermittelkammer über die Axialbohrung mit der Durchlassöffnung im Innenring in Verbindung steht, braucht die Durchlassöffnung nicht exakt zur Axialbohrung ausgerichtet werden, da diese sich über die gesamte Länge des Innenringes erstreckt. Somit eignet sich diese Schmiermittelversorgung auch bei Teilen, die mit geringeren Herstellungstoleranzen gefertigt werden. Da der Schmiermittelring mittels einer einzigen Mutter gegen die Aussenseite bzw. Stirnfläche des Innenringes gepresst wird, lässt sich nach Lösen der Mutter der Schmiermittelring so ausrichten, dass ein ungehinderter Zugang zum Schmiermitteleinlass möglich ist. Hierzu ist es vorteilhaft, dass der Aussenteil ein Kettenrad einer Zugmittelspannvorrichtung ist, die auf einer Lagerfläche eines Rahmens einer landwirtschaftlichen Maschine aufsitzt, und das Kettenrad auf einem als Achse ausgebildeten Schraubenbolzen angeordnet und an der Lagerfläche befestigt ist, wobei die Axialbohrung des Schmiermittelringes und des Innenringes koaxial miteinander verbunden sind und rechtwinklig zur Lagerfläche des Rahmens verlaufen, und der Schmiermittelring eine zweite Schmiermittelkammer aufweist, die mit der ersten Schmiermittelkammer eine gemeinsame Schmiermittelkammer bildet. Eine derartige Schmiermittelversorgung eignet sich insbesondere für Kettenräder, die mittels des Schmierringes und des Schraubenbolzens an einer Halterung befestigt werden. Somit lassen sich auch Kettenräder bzw. deren Lager allseitig ohne weiteres schmieren, wenn diese einseitig an einer Lagerfläche eines Rahmens anliegen. Ferner ist es vorteilhaft, dass der Schraubenbolzen mit einem Bolzenschaft ausgestattet ist, der sich durch die Axialbohrung des Innenringes und des Schmiermittelringes erstreckt und mit der Axialbohrung einen Schmiermittelkanal zwischen der Schmiermittelkammer des Schmiermittelringes und einem Schmiermittelraum des Aussenteils bildet. Durch diese vorteilhafte Verwendung des Schmiermitteldurchlasses zwischen den beiden Schmiermittelkammern ist eine zentrale Schmiermittelversorgung der Wälzlager und des äusseren drehbaren Teiles bzw. des Kettenrades ohne weiteres möglich. Vorteilhaft ist es ferner, dass die Mutter auf den Schraubenbolzen aufschraubbar ist und mit ihrer Stirnseite die Schmiermittelkammer abdichtet, während zur weiteren Abdichtung auf dem Bolzenschaft ein Dichtring sitzt, der gegen die Axialbohrung des Innenringes dichtend anliegt. Ausserdem ist es vorteilhaft, dass die Axialbohrung des Schmiermittelringes als konische Bohrung ausgebildet ist, die die zweite Schmiermittelkammer bildet und die sich in Richtung der Stirnfläche des Innenringes erweitert. Durch die konische Ausbildung der Bohrung erhält man auf einfache Weise eine relativ grosse Schmiermittelkammer zur Versorgung der drehbaren Teile mit Schmiermittel.

In weiterer Ausgestaltung der Erfindung ist es vorteilhaft, dass die Axialbohrung des Innenringes mit einer Ringnut ausgestattet ist, die einerseits mit dem Ringspalt und den sich daran anschliessenden Schmiermittelkammern und andererseits mit einer sich im Innenring radial erstreckenden Bohrung verbunden ist, die in den Schmiermittelraum des drehbaren Aussenteiles mündet. Durch die Verwendung des Ringspaltes zwischen der Axialbohrung und dem zugehörigen Bolzenschaft sowie der sich radial erstreckenden Bohrung gewährleistet man eine zentrale Versorgung der sich drehenden Teile, beispielsweise des Wälzlagers, mit Schmiermittel, so dass eine allseitige Schmiermittelversorgung ohne weiteres möglich ist, da das Schmiermittel mit geringem Druck an die zu schmierenden Teile herangeführt werden kann.

In der Zeichnung ist ein Ausführungsbeispiel einer Erntebergungsvorrichtung nach der Erfindung schematisch dargestellt.

Es zeigt:

Fig. 1 eine Seitenansicht einer Erntebergungsvorrichtung;

Fig. 2 einen Querschnitt durch die Spannvorrichtung einer Förderkette der Erntebergungsvorrichtung;

Fig. 3 einen Längsschnitt eines Schmiermittelringes.

In der Zeichnung ist mit 10 eine Halmteilerspitze bezeichnet, die an einem Gehäuseteil 12 einer Erntebergungsvorrichtung bzw. eines Pflückvorsatzes angeordnet ist, der zur Aufnahme der Maisstengel dient, die zwischen die Einzugsorgane 14 geführt werden, von ihnen erfasst und in die entsprechende Richtung geleitet werden. Dies geschieht im einzelnen durch Einzugsketten 16, wobei die Pflückwalzen 18 die Stengel nach unten ziehen, so dass die Maiskolben mittels Deckplatten und/oder Pflückleisten von den Stengeln abgetrennt bzw. abgequetscht werden.

Pflückvorsätze bzw. Maiserntevorsätze sind vielfach mehrreihig ausgebildet. In der Zeichnung ist jedoch lediglich ein Pflückvorsatz dargestellt.

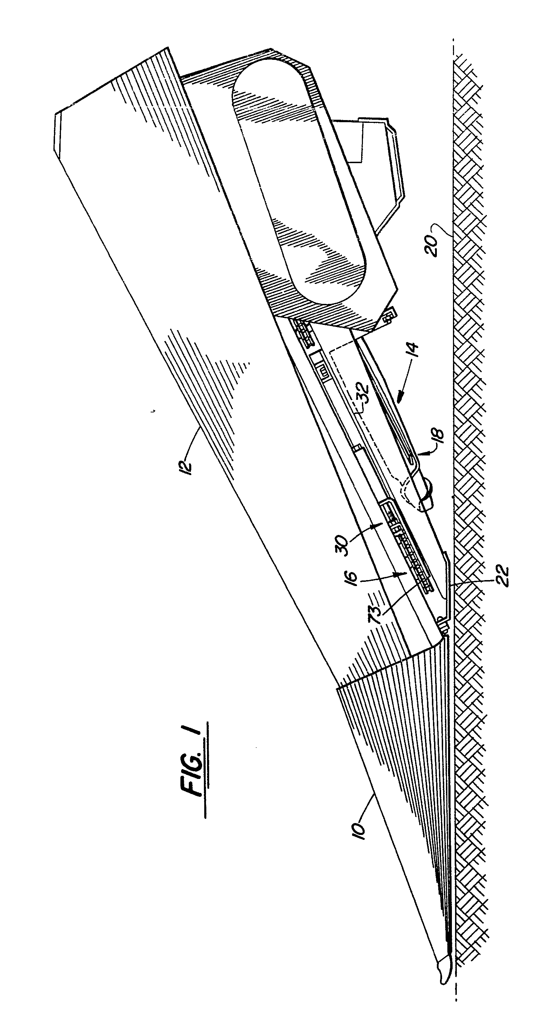

Der Pflückvorsatz bzw. der Maiserntevorsatz arbeitet mit einer Halmteilerspitze 10, die wie aus Fig. 1 hervorgeht, dicht über dem Boden 20 geführt wird, wozu ein am Pflückvorsatz 10 vorgesehener Gleitschuh 22 dient.

Die zugehörigen Antriebsorgane bzw. Vorrichtungsteile die zur Einzugskette 16 gehören sind teilweise in Fig. 2 dargestellt, wobei die Einzugskette 16 der Einfachheit halber fortgelassen ist. In Fig. 2 ist eine Kettenspannvorrichtung 30 und ein Teil einer Deckplatte 32 des Pflückvorsatzes 10 zusammen mit einem Kettenführungselement 34 dargestellt, das auch zur Aufnahme und Führung der Kettenspannvorrichtung 30 dient.

Die Kettenspannvorrichtung 30 besteht aus einem Rahmenteil bzw. aus einem Arm 36, der an seinem hinteren Ende nach oben abgebogen ist und somit eine Führung 38 für ein in Längsrichtung verstellbares und feststellbares Gestänge 40 dient. Auf dem Gestänge 40 sitzt eine Feder 42, die einenends gegen die Führung 38 und anderenends gegen einen Anschlag anliegt, der am rechten Ende des Gestänges 40 vorgesehen ist. Die Feder 42 drückt den Arm 36 mit Bezug auf die Fig. 2 nach links, um die Einzugskette 16 entsprechend vorzuspannen. Die auf die Einzugskette 16 oder die Kettenspannvorrichtung 30 einwirkenden Kräfte drücken den Arm 36 nach rechts und pressen somit die Feder 42 zusammen, wobei ein zu starkes Zusammenpressen der Feder 42 durch eine Distanzhülse 44 verhindert wird, die die Feder 42 umgibt und zwischen der Führung 38 des Armes 36 und dem rechten Ende des Gestänges 40 sitzt. Am vorderen Ende des Armes 36 ist eine Bohrung 46 vorgesehen, die von einer ringförmigen Lagerfläche 48 auf der Oberfläche des Armes 36 umgeben ist.

Auf der Lagerfläche 48 befindet sich eine Kettenradeinrichtung 52, ein Schmiermittelring 54, ein Schraubenbolzen 56 und eine Mutter 58. Der Schmiermittelring 54 und die Kettenradeinrichtung 52 sind koaxial auf der Lagerfläche 48 mittels des Schraubenbolzens 56 und der Mutter 56 befestigt.

Die Kettenradeinrichtung 52 weist einen feststehenden Teil auf, der als Innenring 60 ausgebildet ist. Dieser ist mit einer Axialbohrung 62 versehen, die an der inneren Oberfläche eine Ringnut 64 aufweist, die über eine Querbohrung 66 mit der zylindrischen Aussenoberfläche 68 des Innenringes 60 in Verbindung steht, die als Lagerfläche bzw. Laufspur für ein Kugellager 70 dient. Auf dem Kugellager 70, das den Innenring 60 umgibt, lagert ein Kettenrad 72, das zur Aufnahme der in Fig. 1 dargestellten Einzugskette 73 dient.

Das Kettenrad 72 ist über eine untere Abdeckvorrichtung 74 und eine obere Abdeckvorrichtung 68 geschützt, wobei eine jede Abdeckvorrichtung 64 und 76 einen sich radial erstreckenden Flanschteil 76 bzw. 80 aufweist, der rechtwinklig zur Achse der Axialbohrung 62 des Lagerringes 60 verläuft. Die Abdeckvorrichtung 74 bzw. 76 ist mit je einer Flanschbohrung 81 bzw. 83 versehen, die ebenfalls koaxial zur Axialbohrung 62 verläuft. Schmiermitteldichtungen 82 und 84 sind an den Innen- und Aussenseiten der Kettenradeinrichtungen 52 vorgesehen, um den Kugellagerbereich abzudichten und Schmiermittel bzw. Schmierflüssigkeit in einem Schmiermittelraum 85 zu halten. Der Schmiermittelraum 85 befindet sich zwischen zwei Kettenradhälften des Kettenrades 72, den Abdeckvorrichtungen 74 und 76 sowie zwischen dem Innenring 60. Somit ist an dieser Stelle eine Schmierung des Wälzlagers möglich. Als zusätzliche Abdichtung dient ein O-Ring 86, der auf den Schraubenbolzen 56 aufgezogen ist und einerseits gegen die Lagerfläche 48 und andererseits gegen den inneren Kragen der Abdeckvorrichtung 74 anliegt.

Der Schmiermittelring 54 weist eine sich nach innen erweiternde konische Bohrung 90 auf, deren grösster Durchmesser an der Oberfläche des Innenrings 60 liegt, während die Stirnseiten 92 und 94 des Schmiermittelrings 54 rechtwinklig zur Axialbohrung 62 verlaufen. Der Schmiermittelring 54 ist ferner mit einer äusseren sich konisch erweiternden Ringfläche 96 versehen, so dass eine Einlassbohrung 98, die die Bohrung 90 mit der Ringfläche 96 verbindet, in etwa rechtwinklig zur Innenoberfläche der Bohrung 90 und der Ringfläche 96 verläuft. Auf diese Weise lässt sich ein Schmiernippel 100 wesentlich einfacher montieren und auf der Ringfläche 96 festsetzen.

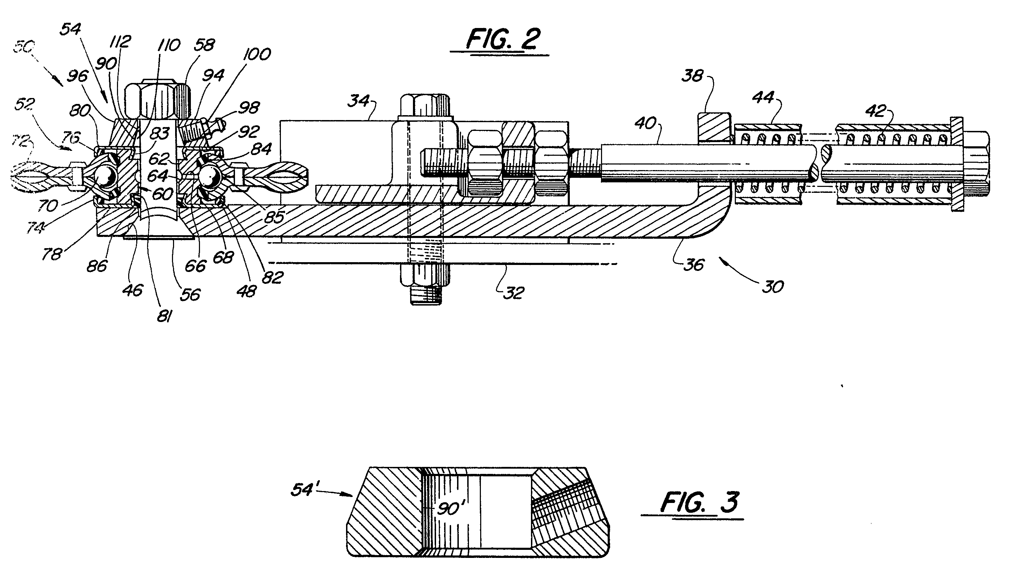

Der Schmiermittelring 54 besteht aus einem Ringkörper, der relativ leicht und kostengünstig herzustellen ist und der auch bei geringfügigen Änderungen den unterschiedlichen Bedingungen einer Kettenspannvorrichtung angepasst werden kann. Beispielsweise ist es auch möglich, die Schmiermitteleinrichtung 54' gemäss Fig. 3 auszubilden, die mit zylindrischen Bohrung 90' versehen ist.

Bei normalen Arbeitsbedingungen läuft das Kettenrad 52, auf dem die Einzugskette 73 geführt ist, auf dem Innenring 60, wobei infolge des Kugellagers 70 geringe Lagerreibkräfte auftreten. Dabei bleibt das Schmiermittel in seinen Schmiermittelkammern 83 und 110, die durch die Axialbohrung 62 und den Innenring 60 sowie durch die konische Bohrung 90 im Schmiermittelring 54 gebildet werden. Die Flanschbohrungen 81 und 83 der Abdeckvorrichtung 74 und 76 bilden ebenfalls teilweise die Schmiermittelkammer 110. Der O-Ring 86 in der Flanschbohrung 81 trägt dazu bei, dass das eine Ende der Schmiermittelkammer 110 gut abgedichtet ist.

Auf diese Weise sind die Lagerteile ausreichend geschützt. Das Schmiermittel wird ohne weiteres durch die Abdeckvorrichtungen 74 und 76, die Dichtelemente 82, 84, 86 und durch die Klemmverbindung, die aus dem Schraubenbolzen 56 und der Mutter 58 besteht, in dem Schmiermittelraum 85 gehalten. Ferner verhindern diese Teile einen radialen Austritt des Schmiermittels entlang den Stirnflächen 92 und 94 und den Flanschteilen 78 und 80 der Schmiermittelvorrichtung sowie entlang den Abdeckvorrichtungen 74 und 76. Die Schmiermittelversorgung und/oder das Durchspülen der Lager, insbesondere des Dichtungsbereiches wird dadurch erreicht, dass Schmiermittel unter Druck in den Schmiernippel 100 eingeführt wird, so dass es dann in die Schmiermittelkammer 110 gelangt und an der Welle 64 entlang in die Querbohrung 66 und in die Lagerbereiche gedrückt wird. Wie aus Fig. 2 hervorgeht, ist der Schmiermittelring 54 mit der sich konisch erweiternden Bohrung 90 versehen, um genügend Schmiermittel aufzunehmen und sicherzustellen, dass das Schmiermittel über die Einlassbohrung 98, entlang dem Bolzenschaft 112 des Schraubenbolzens 56 zur Querbohrung 66 des inneren Lagerringes 60 gelangt.

Wie aus Fig. 2 ferner hervorgeht, können durch Verwendung standardisierter Teile, beispielsweise durch Verwendung des Schraubenbolzens 56 und der Mutter 58 sowie durch Verwendung des einfach herzustellenden Schmiermittelringes 54 die Kosten für die gesamte Vorrichtung wesentlich herabgesetzt werden, ohne wesentliche Änderungen an den Gesamtabmessungen bzw. der Höhe der Kettenspannvorrichtung 30 mit Bezug auf eine konventionelle Kettenspannvorrichtung vornehmen zu müssen. Durch die besonders vorteilhafte Ausgestaltung der Schmiermittelvorrichtung können auch die Lagerhaltungskosten gering gehalten werden, da nur ein zusätzliches, besonders ausgebildetes Teil, beispielsweise der Schmiermittelring 54 notwendig ist, um die Schmiermittelvorrichtung zu vervollständigen und der auch bei anderen Schmiermitteleinrichtungen eingesetzt werden kann, wobei nur die entsprechenden Abmessungen des Schmiermittelrings verändert zu werden brauchen. Mit dieser Anordnung ist es also möglich, mit relativ wenigen Teilen für eine Schmiermittelvorrichtung auszukommen. Die Anpassung des Schmiermittelringes 54 an eine bestimmte Schmiermittelvorrichtung kann auch durch Hinzufügen einer Unterlagsscheibe oder eines Distanzringes vorgenommen werden, um die notwendige Bauhöhe zu erhalten.

In Fig. 3 weist der Schmiermittelring 54' eine geneigt verlaufende Einlassbohrung für den Schmiernippel 100 und die zylindrische Bohrung 90' auf. Auch bei dieser Ausbildung des Schmiermittelringes 54' ist es möglich, den Kragen in jeder beliebigen Stellung festzusetzen und die Lage bzw. Neigung der Gewindebohrung so zu wählen, dass es ohne weiteres möglich ist, an den Schmiernippel 100 heranzukommen. Die hier beschriebene Schmiermittelvorrichtung für die Kettenspannvorrichtung dient insbesondere für eine Kettenspannvorrichtung für den Pflückvorsatz einer Erntebergungsmaschine, so dass diese Schmiermittelvorrichtung erhöhtem Verschleiss ausgesetzt ist, da diese infolge des auftretenden Staubes oder hochgeschleuderter Erdteile stark verschmutzen kann. Im Ausführungsbeispiel gemäss Fig. 1 arbeitet der Pflückvorsatz mit der Halmteilerspitze 10 und den zugehörigen Gleitschuhen 22, die dicht über dem Boden geführt werden, so dass die Kettenspannvorrichtung 50 leicht beschädigbar ist. Es ist jedoch auch möglich, diese Schmiermittelvorrichtung bei anderen Antriebsorganen oder Zugmittelgetrieben einzusetzen. Der Hauptvorteil dieser Schmiermittelvorrichtung liegt in der Verwendung relativ einfacher Bauteile in Kombination mit standardisierten Teilen, so dass die Herstellungskosten und auch die Lagerhaltungskosten klein gehalten werden können. Dies trifft insbesondere für den erfindungsgemässen Schmiermittelring 54 der Schmiermittelvorrichtung zu, der relativ wenig Raum beansprucht.

**Patentansprüche**

1. Schmiermittelvorrichtung für ein auf einer Achse (56) angeordnetes Lager (70), das einen auf der gleichen Achse (56) konzentrisch angeordneten, mit dieser drehfest verbundenen Innenring (60), einen auf dem Innenring angeordneten drehbaren Aussenteil (Kettenrad 72) sowie einen zwischen dem Innenring und dem Aussenteil vorgesehenen, über einen Schmiermitteleinlass (Einlassbohrung 98) beaufschlagbaren Schmiermittelraum (85) aufweist, wobei der Innenring (60) gegenüberliegende Stirnflächen und eine sich durch diese erstreckende Axialbohrung (62) aufweist und der Schmiermitteleinlass (Einlassbohrung 98) in einem auf der Achse (Schraubenbolzen 56) angeordneten, Stirnflächen und eine Axialbohrung (90) aufweisenden Schmiermittelring (54) vorgesehen ist, wobei der Schmiermittelring (54) mit seiner einen Stirnfläche gegen die Stirnfläche des Innenringes (60) konzentrisch und drehfest anliegt und sein Schmiermitteleinlass (Einlassbohrung 98) mit einer zwischen der Axialbohrung (62) des Innenringes (60) und der Achse (56) gebildeten ersten Schmiermittelkammer (Flanschbohrung 83) in Schmiermittelverbindung steht, dadurch gekennzeichnet, dass die Schmiermittelkammer (Flanschbohrung 83) über einen zwischen der Achse und der Axialbohrung (62) des Innenringes (60) gebildeten Ringspalt und über einen im Innenring (60) vorgesehenen Schmiermitteldurchlass (Querbohrung 66) mit dem zwischen dem Innenring und dem Aussenteil vorgesehenen Schmiermittelraum (85) in Verbindung steht, wobei der Schmiermittelring (54) mittels einer Mutter (38) gegen die aussenliegende Stirnfläche des Innenringes (60) anpressbar und nach Lösen der Mutter durch Drehen einstellbar ist.

2. Schmiermittelvorrichtung nach Anspruch 1, dadurch gekennzeichnet, dass der Aussenteil ein Kettenrad (72) einer Zugmittelspannvorrichtung ist, die auf einer Lagerfläche (48) eines Rahmens (36) einer landwirtschaftlichen Maschine aufsitzt, und das Kettenrad (72) auf einem als Achse ausgebildeten Schraubenbolzen (56) angeordnet und an der Lagerfläche (68) befestigt ist, wobei die Axialbohrung (62, 90) des Schmiermittelringes (54, 54') und des Innenringes (60) koaxial miteinander verbunden sind und rechtwinklig zur Lagerfläche (48) des Rahmens (36) verlaufen, und der Schmiermittelring (54, 54') eine zweite Schmiermittelkammer (110) aufweist, die mit der ersten Schmiermittelkammer (Flanschbohrung 83) eine gemeinsame Schmiermittelkammer (Flanschbohrung 83, 110) bildet.

3. Schmiermittelvorrichtung nach den Ansprüchen 1 und 2, dadurch gekennzeichnet, dass der Schraubenbolzen (56) mit einem Bolzenschaft (112) ausgestattet ist, der sich durch die Axialbohrung (62) des Innenringes (60) und des Schmiermittelringes (54, 54') erstreckt und mit der Axialbohrung (62) einen Schmiermittelkanal zwischen der Schmiermittelkammer (110) des Schmiermittelringes (54, 54') und einem Schmiermittelraum (85) des Aussenteils (Spannrad 72) bildet.

4. Schmiermittelvorrichtung nach einem oder mehreren der vorherigen Ansprüche, dadurch gekennzeichnet, dass die Mutter (58) auf den Schraubenbolzen (56) aufschraubbar ist und mit ihrer Stirnseite (94) die Schmiermittelkammer (110) abdichtet, während zur weiteren Abdichtung auf dem Bolzenschaft (112) ein Dichtring (86) sitzt, der gegen die Axialbohrung (62) des Innenringes (60) dichtend anliegt.

5. Schmiermittelvorrichtung nach einem oder mehreren der vorherigen Ansprüche, dadurch gekennzeichnet, dass die Axialbohrung des Schmiermittelringes (54) als konische Bohrung (90) ausgebildet ist, die die zweite Schmiermittelkammer (Flanschbohrung 83) bildet und die sich in Richtung der Stirnfläche (92) des Innenringes (60) erweitert.

6. Schmiermittelvorrichtung nach einem oder mehreren der vorherigen Ansprüche, dadurch gekennzeichnet, dass die Axialbohrung (62) des Innenringes (60) mit einer Ringnut (64) ausgestattet ist, die einerseits mit dem Ringspalt und den sich daran anschliessenden Schmiermittelkammern (Flanschbohrung 83, 110) und andererseits mit einer sich im Innenring radial erstreckenden Bohrung (66) verbunden ist, die in den Schmiermittelraum (85) des drehbaren Aussenteiles (72) mündet.

## Claims

1. A lubrication device for a bearing (70) which is disposed on a spindle (56) and which has an inner ring (60) arranged concentrically on and non-rotatably connected to the same spindle (56), a rotatable outer member (chain wheel 72) disposed on the inner ring, and a lubrication space (85) which is provided between the inner ring and the outer member and which can be supplied by way of a lubricant inlet (inlet bore 98), wherein the inner ring (60) has oppositely disposed end faces and an axial bore (62) extending therethrough, and the lubricant inlet (inlet bore 98) is provided in a lubrication ring (54) which is disposed on the spindle (screw pin 56) and has end faces and an axial bore (90), wherein the lubrication ring (54) bears concentrically and non-rotatably with its one end face against the end face of the inner ring (60) and its lubricant inlet (inlet bore 98) is in lubrication communication with a first lubrication chamber (flange bore 83) formed between the axial bore (62) of the inner ring (60) and the spindle (56), characterised in that the lubrication chamber (flange bore 83) communicates with the lubrication space (85) between the inner ring and the outer member, by way of an annular gap which is formed between the spindle and the axial bore (62) of the inner ring (60) and by way of a lubricant passage (transverse bore 66) provided in the inner ring (60), wherein the lubrication ring (54) can be pressed by means of a nut (38) against the outward end face of the inner ring (60) and, after the nut has been released, is adjustable by rotation.

2. A lubrication device according to claim 1 characterised in that the outer member is a chain wheel (72) of a pulling means tensioning device which is carried on a bearing surface (48) of a frame (36) of an agricultural machine, and the chain wheel (72) is arranged on a screw pin (58) which is in the form of a spindle, and is secured to the bearing surface (68), wherein the axial bores (62, 90) of the lubrication ring (54, 54') and the inner ring (60) are coaxially connected together and extend normal to the bearing surface (48) of the frame (36), and the lubrication ring (54, 54') has a second lubrication chamber (110) which, with the first lubrication chamber (flange bore 83) forms a common lubrication chamber (flange bore 83, 110).

3. A lubrication device according to claims 1 and 2 characterised in that the screw pin (56) is provided with a pin shank (112) which extends through the axial bore (62) of the inner ring (60) and the lubrication ring (54, 54') and, with the axial bore (62), forms a lubrication duct between the lubrication chamber (110) of the lubrication ring (54, 54') and a lubrication space (85) of the outer member (tensioning wheel 72).

4. A lubrication device according to one or more of the preceding claims characterised in that the nut (58) can be screwed onto the screw pin (56) and with its face (94) seals off the lubrication chamber (110), while for further sealing purposes, carried on the pin shank (112) is a sealing ring (86) which bears sealingly against the axial bore (62) of the inner ring (60).

5. A lubrication device according to one or more of the preceding claims characterised in that the axial bore of the lubrication ring (54) is formed as a conical bore (90) which forms the second lubrication chamber (flange bore 83) and which increases in size in the direction of the end face (92) of the inner ring (60).

6. A lubrication device according to one or more of the preceding claims characterised in that the axial bore (62) of the inner ring (60) is provided with an annular groove (64) which is connected on the one hand to the annular gap and to the adjoining lubrication chambers (flange bore 83, 110) and on the other hand to a bore (66) which extends radially in the inner ring and which opens into the lubrication space (85) of the rotatable outer member (72).

## Revendications

1. Dispositif de graissage pour palier ou roulement (70) monté sur un axe (56) et constitué par une bague intérieure (60) montée concentriquement sur l'axe et calée angulairement sur lui, par une partie extérieure (roue à chaîne 72) montée de façon rotative sur cette bague intérieure, ainsi que par une chambre à graisse (85) prévue entre la bague intérieure et la partie extérieure et alimentée par un orifice d'entrée de la graisse (perçage d'entrée 98), la bague intérieure (60) comportant des faces terminales opposées et un alésage axial (62) s'étendant à travers celles-ci et l'orifice d'entrée de la graisse (perçage d'entrée 98) étant prévu dans une bague à graisse (54) disposée sur l'axe (boulon 56) et comportant des faces terminales et un alésage axial (90), la bague à graisse (54) s'appliquant concentriquement et d'une manière s'opposant à une rotation, par l'une de ses faces terminales, contre la face terminale de la bague intérieure (60), son orifice d'entrée de la graisse (perçage d'entrée 98) étant en communication, pour le passage de la graisse, avec une première chambre à graisse (perçage de flasque 83) ménagée entre l'alésage axial (62) de la bague intérieure (60) et l'axe (56), caractérisé en ce que la chambre à graisse (perçage de flasque 83) est en communication, par un interstice annulaire ménagé entre l'axe et l'alésage axial (62) de la bague intérieure (60) et par un passage prévu pour la graisse (perçage transversal 66) ménagé dans la bague intérieure (60), avec la chambre à graisse (85) prévue entre la bague intérieure et la partie extérieure, la bague à graisse (54) pouvant être appliquée sous pression au moyen d'un écrou (58) contre la face extérieure de la bague intérieure (60) et étant réglable par rotation après desserrage de l'écrou.

2. Dispositif de graissage suivant la revendication 1, caractérisé en ce que la partie extérieure est formée par une roue à chaîne (72) d'un dispositif de tension à organe travaillant à la traction, qui repose sur une surface de portée (48) d'un châssis (36) de machine agricole, et en ce que la roue à chaîne (72) est disposée sur un boulon (56) formant axe et est fixée sur la surface de portée (68), les alésages axiaux (62, 90) de la bague à graisse (54, 54') et de la bague intérieure (60) étant reliés coaxialement ensemble et s'étendant perpendiculairement à la surface de portée (48) du châssis (36), la bague à graisse (54, 54') comportant une seconde chambre à graisse (110) qui forme, avec la première chambre à graisse (perçage de flasque 83), une chambre à graisse commune (perçage de flasque 83, 110).

3. Dispositif de graissage suivant les revendications 1 et 2, caractérisé en ce que le boulon (56) est muni d'une tige (112) qui s'étend à travers l'alésage axial (62) de la bague intérieure (60) et celui de la bague à graisse (54, 54') et qui forme avec l'alésage axial (62) un canal de graissage entre la chambre à graisse (110) de la bague à graisse (54, 54') et une chambre à graisse (85) de la partie extérieure (roue de tension 72).

4. Dispositif de graissage suivant l'une quelconque des revendications précédentes, caractérisé en ce que l'écrou (58) peut être vissé sur le boulon (56) et assure par sa face terminale (94) l'étanchéité de la chambre à graisse (110), tandis qu'il est prévu sur la tige du boulon (112), pour assurer encore l'étanchéité, une bague d'étanchéité (86) qui s'applique de façon étanche contre l'alésage axial (62) de la bague intérieure (60).

5. Dispositif de graissage suivant l'une quelconque des revendications précédentes, caractérisé en ce que l'alésage axial de la bague à graisse (54) a la forme d'un alésage conique (90) qui forme la seconde chambre à graisse (perçage de flasque 83) et qui s'élargit en direction de la face terminale (92) de la bague intérieure (60).

6. Dispositif de graissage suivant l'une quelconque des revendications précédentes, caractérisé en ce que l'alésage axial (62) de la bague intérieure (60) est muni d'une rainure annulaire (64) qui est reliée, d'une part, à l'interstice annulaire et aux chambres à graisse (perçage de flasque 83, 110) s'y raccordant et, d'autre part, à un perçage (66) s'étendant radialement dans la bague intérieure, qui débouche dans la chambre à graisse (85) de la partie extérieure rotative (72).

*FIG. I*

0 043 581

FIG. 2

FIG. 3

0 043 581